# EUROPÄISCHE PATENTSCHRIFT

(11) **EP 3 090 309 B1**
(45) Veröffentlichungstag und Bekanntmachung des Hinweises auf die Patenterteilung: **31.05.2017**
(21) Anmeldenummer: 15705575.7
(22) Anmeldetag: 13.02.2015
(51) Int. Cl.: G02F 1/13357, G02F 1/13

(54) **SCHALTBARE BELEUCHTUNGSEINRICHTUNG UND DEREN VERWENDUNG**
SWITCHABLE BACKLIGHT DEVICE AND UTILISATION THEREOF
DISPOSITIF DE RÉTROÉCLAIRAGE ET SON UTILISATION

(30) Priorität: 17.02.2014 DE 102014002338
(43) Veröffentlichungstag der Anmeldung: 09.11.2016
(73) Patentinhaber: siOPTICA GmbH, 07745 Jena (DE)
(72) Erfinder: KLIPPSTEIN, Markus, 07751 Jena (DE); SCHWARZ, Juergen, 99510 Apolda (DE)
(74) Vertreter: Patentanwälte Geyer, Fehners & Partner mbB
(86) Internationale Anmeldenummer: PCT/EP2015/053050
(87) Internationale Veröffentlichungsnummer: WO 2015/121398

(56) Entgegenhaltungen:
- US-A1- 2009 067 156
- US-A1- 2012 235 891

## Beschreibung

### Gebiet der Erfindung

In den letzten Jahren wurden große Fortschritte zur Verbreiterung des Sehwinkels bei LCDs erzielt. Allerdings gibt es oft Situationen, in denen dieser sehr große Sehbereich eines Bildschirms von Nachteil sein kann. Zunehmend werden auch Informationen auf mobilen Geräten wie Notebooks und Tablet-PCs verfügbar, wie Bankdaten oder andere, persönliche Angaben, und sensible Daten. Dem entsprechend brauchen die Menschen eine Kontrolle darüber, wer diese sensiblen Daten sehen darf; sie müssen wählen können zwischen einem weiten Betrachtungswinkel, um Informationen auf ihrem Display mit anderen zu teilen, z.B. beim Betrachten von Urlaubsfotos oder auch für Werbezwecke. Andererseits benötigen sie einen kleinen Betrachtungswinkel, wenn sie die Bildinformationen vertraulich behandeln wollen.

### Stand der Technik

Zusatzfolien, die auf Mikro-Lamellen basieren, wurden bereits für mobile Displays eingesetzt, um deren optischen Datenschutz zu erreichen. Allerdings waren diese Folien nicht (um)schaltbar, sie mussten immer erst per Hand aufgelegt und danach wieder entfernt werden. Auch muss man sie separat zum Display transportieren, wenn man sie nicht gerade braucht. Ein wesentlicher Nachteil des Einsatzes solcher Lamellen-Folien ist ferner mit den einhergehenden Lichtverlusten verbunden.

Die US 6,765,550 beschreibt einen solchen Sichtschutz durch Mikro-Lamellen. Größter Nachteil ist hier die mechanische Entfernung bzw. der mechanische Anbau des Filters sowie der Lichtverlust im geschützten Modus.

In der US 5,993,940 wird der Einsatz einer Folie beschrieben, die auf ihrer Oberfläche gleichmäßig angeordnete, kleine Prismenstreifen hat, um einen Privacy-Modus zu erzielen. Entwicklung und Herstellung sind recht aufwändig.

In der WO 2012/033583 wird die Umschaltung zwischen freier und eingeschränkter Sicht vermittels der Ansteuerung von Flüssigkristellen zwischen sogenannten "chromonischen" Schichten erzeugt. Hierbei entsteht ein Lichtverlust und der Aufwand ist recht hoch.

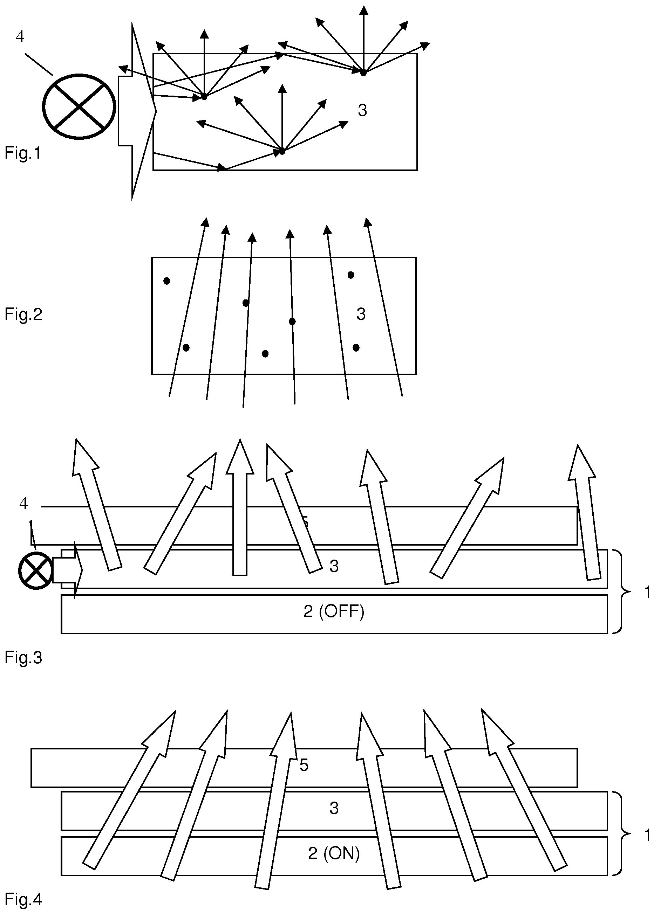

Die Schrift US 2009/0067156 offenbart eine Vielzahl an Ideen, um ein Beleuchtungssystem und Bildschirmgerät auszugestalten. Die dort in den Figuren 3A und 3B abgebildete Variante verwendet insbesondere zwei Hintergrundbeleuchtungen, sogenannte Backlights, bestehend aus keilförmigen Lichtleitern, und ein LCD-Panel, wobei das hintere Backlight 40 zwingend einen weiten Beleuchtungswinkel und das vordere Backlight 38 zwingend einen schmalen Beleuchtungswinkel erzeugen soll. Unklar bleibt hierbei jedoch die Funktionsweise, wie das Backlight 38 einen schmalen Beleuchtungswinkel erzeugen soll, ohne dass das Licht mit einem weiten Beleuchtungswinkel, welches vom Backlight 40 herrührt, beim Durchgang durch das Backlight 38 wesentlich in Licht mit einem schmalen Beleuchtungswinkel umgewandelt wird.

Zur Ausgestaltung nach Fig.5 der US 2009/0067156 ist zu bemerken, dass beide Lichtleiter 46 und 48 jeweils "narrow light", also Licht mit einem schmalen Beleuchtungswinkel, produzieren. Das Licht des Lichtleiters 48 wird erst durch einen aufwändig mit Prismenstrukturen zu erstellenden Teilspiegel 50 in "wide light", also Licht mit einem weiten Beleuchtungswinkel, umgewandelt. Diese Umwandlung beschneidet die Lichtintensität extrem, da das zunächst in einen schmalen Beleuchtungswinkel abgestrahlte Licht, welches als einziges Licht zur Verfügung steht, dann in einen großen Beleuchtungswinkel, i.d.R. den Halbraum, aufgefächert wird. Dies hat zur Folge, dass je nach Parametern die Helligkeit um einen Faktor 5 oder mehr verringert wird (bezogen auf die Leuchtdichte). Es handelt sich also um eine praktisch wenig relevante Ausgestaltung.

In der Ausgestaltung nach Fig.7 der US 2009/0067156 ist zwingend eine Phosphorschicht notwendig, diese soll UV-Licht in sichtbares Licht umwandeln. Dieser Aufwand ist groß und bei dem Wunsch nach hinreichend Licht aus dem Backlight, um ein LCD-Panel lesbar zu beleuchten, werden sehr große Intensitäten an UV-Licht benötigt. Mithin ist dies teuer, aufwändig und schon von der Abschirmung der benötigten UV-Strahlung her nicht praktikabel.

Die US 2012/0235891 beschreibt ein sehr aufwändiges Backlight in einem Bildschirm. Dort kommen gemäß Fig.1 und 15 nicht nur mehrere Lichtleiter zum Einsatz, sondern auch weitere komplexe optische Elemente wie etwa Mikrolinsenelemente 40 und Prismenstrukturen 50, die das Licht von der hinteren Beleuchtung auf dem Weg zur vorderen Beleuchtung umformen. Dies ist teuer und aufwändig umzusetzen und ebenso mit Lichtverlust verbunden. Gemäß der Variante nach Fig.17 in der US 2012/0235891 produzieren beide Lichtquellen 4R und 18 Licht mit einem schmalen Beleuchtungswinkel, wobei das Licht von der hinteren Lichtquelle 18 erst aufwändig in Licht mit einem großen Beleuchtungswinkel, umgewandelt wird. Diese komplexe Umwandlung ist - wie weiter oben schon bemerkt - stark helligkeitsmindernd.

Gemäß der JP 2007-155783 werden spezielle, aufwändig zu berechnende und herzustellende optische Oberflächen 19 genutzt, die dann Licht je nach Lichteinfallswinkel in verschiedene schmale oder breite Bereiche ablenken. Diese Strukturen ähneln Fresnel-Linsen. Ferner sind Störflanken vorhanden, die Licht in unerwünschte Richtungen ablenken. Somit bleibt unklar, ob wirklich sinnvolle Lichtverteilungen erreicht werden können.

Den vorgenannten Verfahren und Anordnungen ist in der Regel der Nachteil gemein, dass sie die Helligkeit des Grundbildschirms deutlich reduzieren und/oder ein aktives optisches Element zur Modi-Umschaltung benötigen und/oder eine aufwändige sowie teure Herstellung erfordern und/oder die Auflösung im frei betrachtbaren Modus reduzieren.

### Beschreibung der Erfindung

Es ist daher Aufgabe der Erfindung, eine schaltbare Beleuchtungseinrichtung zu beschreiben, die mindestens zwei Beleuchtungsmodi ermöglicht, wobei der eine Modus nur einen eingeschränkten Raumwinkel beleuchtet und der andere Modus die Beleuchtung in einen möglichst großen Raumwinkel gestattet. Somit soll bei Verwendung der Beleuchtungseinrichtung mit einem Bildschirm eine sichere Darstellung von Informationen durch einen wahlweise eingeschränkten Betrachtungswinkel realisiert werden, wobei in einem zweiten Modus eine freie, möglichst im Betrachtungswinkel uneingeschränkte Sicht möglich sein soll. Die Beleuchtungseinrichtung soll mit einfachen Mitteln preisgünstig umsetzbar sein. In beiden Betriebsmodi soll eine möglichst hohe Auflösung, besonders bevorzugt die native Auflösung des verwendeten Bildschirms, sichtbar sein. Ferner soll nur ein möglichst geringer Lichtverlust durch die Lösung eingeführt werden.

Die Aufgabe der Erfindung wird erfindungsgemäß gelöst von einer Beleuchtungseinrichtung, die in mindestens zwei Betriebsarten B1 für einen freien Sichtmodus und B2 für einen eingeschränkten Sichtmodus betrieben werden kann, umfassend
- eine flächenartig ausgedehnte Hintergrundbeleuchtung, die in der Betriebsart B2 für einen eingeschränkten Sichtmodus Licht in einen eingeschränkten Winkelbereich abstrahlt, wobei das von der Hintergrundbeleuchtung ausgehende Licht in mindestens einer Richtung, die in einem Winkel größer als 45 Grad zur Flächennormale der Hintergrundbeleuchtung gelegen ist, mit höchstens 10% der maximalen Lichtstärke abgestrahlt wird,
- ein in Betrachtungsrichtung vor der Hintergrundbeleuchtung gelegenes, plattenförmiges optisches Element, und
- Leuchtmittel, die seitlich an Schmalseiten des optischen Elements angeordnet sind,
- wobei
   - das optische Element als Lichtleiter ausgebildet ist, welcher aus einem Matrixkunststoff A und darin homogen verteilten Streupartikeln aus einem Polymerisat B, besteht,
   - der Anteil der Streupartikel bestehend aus Polymerisat B 0,01 bis 3 Gewichtsprozent bezogen auf den Matrixkunststoff A beträgt,
   - die Brechzahl nD(B) des Polymerisats B um mindestens 0,01 Einheiten über der Brechzahl nD(A) des Matrixkunststoffs A liegt,
   - und der Lichtleiter für das von der Hintergrundbeleuchtung ausgehende Licht zu mindestens 80% transparent ist,
   - so dass das aus den Leuchtmitteln seitlich in das optische Element einfallende Licht für einen freien Sichtbereich im Modus B1 in Richtungen, die in Winkeln größer als 45 Grad zur Flächennormale der Hintergrundbeleuchtung gelegen sind, mit mindestens 20% der maximalen Lichtstärke abgestrahlt wird,
- wobei in der Betriebsart B2 die Hintergrundbeleuchtung ein- und die Leuchtmittel ausgeschaltet sind, und wobei in der Betriebsart B1 die Leuchtmittel ein- und die Hintergrundbeleuchtung ausgeschaltet sind.

Der besagte Matrixkunststoff A ist bevorzugt mit dem Polymerisat B unverträglich.

Das plattenförmige optische Element besteht dabei aus zwei einander gegenüberliegenden Großflächen, die parallel zueinander angeordnet sind. Insbesondere ist eine keilförmige Struktur dabei ausgeschlossen. Die beiden Großflächen werden von vier Schmalseiten umrandet, welche zur Lichteinkopplung des von den Leuchtmitteln abgestrahlten Lichts in das optische Element verwendet werden können. Die Streupartikel sind homogen verteilt, wodurch das optische Element keine inhomogene optische Struktur aufweist.

Durch diese Konfiguration des optischen Elements aus Matrixkunststoff mit homogen darin verteilten Polymerisat-Streupartikeln findet im optischen Element und auch in der gesamten Beleuchtungseinrichtung keine oder zumindest nur eine vernachlässigbare Umwandlung von Licht, welches von der Hintergrundbeleuchtung herrührt und ursprünglich in einen eingeschränkten Winkelbereich abgestrahlt wird, in Licht, welches in einen uneingeschränkten Winkelbereich abgestrahlt wird, statt.

Das von der Hintergrundbeleuchtung ausgehende Licht wird im Betriebszustand B2 in mindestens einer Richtung, welche in einem Winkel größer als 45 Grad zur Flächennormale gelegen ist, mit höchstens 10% der maximalen Lichtstärke abgestrahlt. Diese Richtung kann - projiziert auf die Fläche - beispielsweise in der Horizontalen - bezogen auf einen Betrachter - liegen, die Abstrahlung erfolgt dann sinnvollerweise in der horizontalen Ebene eingeschränkt. In der Vertikalen, also senkrecht dazu, muss sie dann nicht unbedingt eingeschränkt erfolgen, wobei auch die umgekehrte Ausgestaltung denkbar ist. Der Übergang zwischen eingeschränktem Abstrahlbereich und nicht eingeschränktem Abstrahlbereich kann kontinuierlich oder diskret erfolgen. In einer bevorzugten, einfach herzustellenden Ausführung erfolgt die Abstrahlung in einen eingeschränkten Winkelbereich im Betriebsmodus B2 jedoch in allen Richtungen, die in Winkeln größer als 45 Grad zur Flächennormale der Hintergrundbeleuchtung gelegen sind, d.h. außerhalb des 45-Grad-Kegels, mit höchstens 10% der maximalen Lichtstärke um die Sichtbarkeit zu schützender Informationen möglichst umfassend einzuschränken.

Mit anderen Worten, die Beleuchtungseinrichtung, die in mindestens zwei Betriebsarten B1, B2, .., betrieben werden kann, umfasst
- eine flächenartig ausgedehnte Hintergrundbeleuchtung, die Licht mit einer solchen Abstrahlcharakteristik abstrahlt, dass in Richtungen, die in Winkeln größer als 45 Grad zur Flächennormale der Hintergrundbeleuchtung gelegen sind, höchstens 10% der maximalen Lichtstärke abgestrahlt werden,
- ein in Betrachtungsrichtung vor der Hintergrundbeleuchtung gelegenes optisches Element, welches für das von der Hintergrundbeleuchtung ausgehende Licht zu mindestens 80% transparent ist, und welches für aus Leuchtmitteln seitlich in Winkeln von über 80 Grad gegenüber seiner Flächennormale einfallendes Licht in einen möglichst großen Winkelbereich ablenkt, so dass in Richtungen, die in Winkeln größer als 45 Grad zur Flächennormale der Hintergrundbeleuchtung gelegen sind, mindestens 20% der maximalen Lichtstärke abgestrahlt werden,
- wobei das optische Element als Lichtleiter wie oben beschrieben ausgestaltet ist,
- und wobei in der Betriebsart B2 die Hintergrundbeleuchtung, nicht aber die Leuchtmittel eingeschaltet sind, und wobei in der Betriebsart B1 die Leuchtmittel eingeschaltet sind, nicht aber die Hintergrundbeleuchtung.

Grundsätzlich bleibt die Leistungsfähigkeit dieser Ausgestaltung der Erfindung erhalten, wenn die vorbeschriebenen Parameter in bestimmten Grenzen variiert werden. So kann etwa die Hintergrundbeleuchtung Licht mit einer solchen Abstrahlcharakteristik abstrahlen, dass in Richtungen, die in Winkeln größer als 10..45 Grad zur Flächennormale der Hintergrundbeleuchtung gelegen sind, höchstens 0..20% der maximalen Lichtstärke abgestrahlt werden.

Ungeachtet dessen kann ferner das in Betrachtungsrichtung vor der Hintergrundbeleuchtung gelegene optische Element, welches für das von der Hintergrundbeleuchtung ausgehende Licht zu mindestens 80% - oder auch zu weniger als 80%, etwa 70% oder sogar nur 50% - transparent ist, das aus Leuchtmitteln seitlich in Winkeln von über 80 Grad gegenüber seiner Flächennormale einfallende Licht in einen möglichst großen Winkelbereich ablenken, so dass in Richtungen, die in Winkeln größer als 10..70 Grad zur Flächennormale der Hintergrundbeleuchtung gelegen sind, mindestens 10..70% der maximalen Lichtstärke abgestrahlt werden.

Ferner ist anzumerken, dass während das aus den Leuchtmitteln seitlich in das optische Element einfallende Licht für einen freien Sichtbereich, d.h. im Modus B1, in Richtungen, die in Winkeln größer als 45 Grad zur Flächennormale der Hintergrundbeleuchtung gelegen sind, mit mindestens 20% der maximalen Lichtstärke abgestrahlt wird, selbstredend in Winkel kleiner als 45 Grad zur Flächennormale der Hintergrundbeleuchtung gelegen sind ebenso ein Großteil des Lichtes abgestrahlt bzw. ausgekoppelt wird, so dass insgesamt ein sehr großer Winkelbereich, im besten Falle etwa der Halbraum vor dem optischen Element, ausgeleuchtet wird.

Die Streupartikel im optischen Element, d.h. dem Lichtleiter, bilden die entsprechende Lichtauskoppelstruktur.

Die Hintergrundbeleuchtung kann vorteilhaft ausgebildet sein als Side-light, Edgelight, Direct LED Backlight, edge LED Backlight, OLED oder als ein anderer Flächenstrahler. Die Hintergrundbeleuchtung kann auch eine Dunkelfeldbeleuchtung sein.

Beispielsweise ist die Hintergrundbeleuchtung eine typisches Backlight (Edgelight, Direct LED Backlight o.ä.), auf welches ein permanenter Sichtschutzfilter, auch als Privacy-filter (z.B. Vikuiti™ von 3M™) bezeichnet, aufgebracht ist, um die Abstrahlcharakteristik des Lichtes derart zu beschneiden, dass das Licht im Wesentlichen nur in einen eingeschränkten Raumwinkel abgestrahlt wird.

Besonders bevorzugt jedoch enthält die Hintergrundbeleuchtung an Stelle eines permanenten Privacy-Filters mindestens eine optische Schicht zur Kollimation von Licht, um eine winkeleingeschränkte Abstrahlcharakteristik des von ihr ausgestrahlten Lichtes zu erzielen. Dabei kann es sich zum Beispiel um 2 gekreuzte Schichten vom Typ "Optical Lighting Film" (OLF) Typ 2301 von 3M™ handeln.

Im Rahmen der Erfindung liegt auch die Verwendung der Beleuchtungseinrichtung wie vorstehend beschrieben, bei welcher vor der Beleuchtungseinrichtung ein transmissiver Bildgeber, beispielsweise ein LCD-Panel, angeordnet ist, so dass im Modus B1, d.h. im freien Sichtmodus das auf dem Bildgeber dargestellte Bild im Wesentlichen aus jeder Richtung, die höchstens 90 Grad zur Mittelsenkrechten des Bildgebers geneigt ist, sichtbar ist, und so dass im Modus B2, d.h. im eingeschränkten Sichtmodus das auf dem Bildgeber dargestellte Bild im Wesentlichen nur aus Richtungen, die höchstens 45 Grad zur Mittelsenkrechten des Bildgebers geneigt ist, sichtbar ist.

Die Winkelmaße können je nach Ausgestaltung der Komponenten, wie oben beschrieben, schwanken. Bei bestimmten Anwendungen ist ein gewisses Restlicht bei Schrägsicht aus großen Winkeln, z.B. über 45 Grad zur Mittelsenkrechten des Bildgebers, erlaubt. Bei den Leuchtmitteln kann es sich beispielsweise um LEDs oder Laserdioden handeln. Andere Ausgestaltungen sind möglich.

Schließlich kann es noch weitere Betriebsmodi geben, etwa einen Betriebsmodus B3, in welchem jeweils beide Komponenten, also sowohl die Hintergrundbeleuchtung als auch die Leuchtmittel, eingeschaltet sind. Bei Verwendung der Beleuchtungseinrichtung im Modus B3 mit einem Bildgeber ergibt sich damit ein besonders helles Bild, das zum Rande hin dunkler wird. Weitere Betriebsmodi, etwa mit gedimmten Leuchtwerten für die Hintergrundbeleuchtung als auch für die Leuchtmittel sind denkbar. Überdies können auch der Übergang zwischen den Betriebsmodi, insbesondere zwischen den Modi B1 und B2 oder umgekehrt graduell geschaltet werden, etwa wenn über einen kleinen zeitlichen Verlauf, z.B. über ein bis zwei Sekunden hinweg, die Helligkeit der Hintergrundbeleuchtung auf null gefahren wird während gleichzeitig die Helligkeit der Leuchtmittel auf ein Maximum oder einen bestimmten Wert hochgefahren wird, und umgekehrt. Bei Verwendung der Erfindung mit einem Bildgeber findet dann zwischen dem freien Sichtmodus und dem eingeschränkten Sichtmodus ein angenehmer Übergang statt. In einer bevorzugten Ausgestaltung umfasst die Beleuchtungseinrichtung daher eine elektronische Ansteuerung, welche den Übergang zwischen den Betriebsmodi B1 und B2 oder umgekehrt entsprechend graduell steuert.

Weiterhin lässt sich die Erfindung wie folgt noch vorteilhaft ausgestalten:
Der Lichtleiter, der das optische Element bildet, kann beispielsweise aus dem Material Evonik LD12 8N oder Evonik PLEXIGLAS^{®} LED Folie 15950/99/1-3 bestehen.

Außerdem ist es sinnvoll, wenn die Lichteinkopplung aus den seitlich angeordneten Leuchtmitteln von mindestens zwei Seiten, bevorzugt von einander gegenüberliegenden Seiten, erfolgt.

Vermittels einer Teilverspiegelung auf der der Hintergrundbeleuchtung zugewandten Seite des optischen Elements kann insgesamt eine bessere Lichtausbeute erzielt werden, weil dann zur Hintergrundbeleuchtung hin austretendes Licht wieder zurück in nutzbare Lichtrichtungen gespiegelt wird.

In einer bevorzugten Ausgestaltung ist das optische Element auf seiner der Hintergrundbeleuchtung zugewandten Seite teilverspiegelt, wobei die Stärke der Verspiegelung über die Fläche variiert, um in der Betriebsart B1, dem Modus freier Sicht, über die Fläche auftretende Helligkeitsunterschiede des aus dem optischen Element ausgekoppelten Lichts auszugleichen. Diese Helligkeitsunterschiede treten aufgrund der inhomogenen Beleuchtung auf, welche mit den nur auf der Seite angeordneten Leuchtmitteln zusammenhängt: In der Mitte der Fläche ist ein dargestellter Inhalt dunkler als an den Rändern, näher zu einem der Leuchtmittel. Die Variation kann auf verschiedene Weisen erfolgen. Zum einen kann die Stärke der Verspiegelung, d.h. das Verhältnis von Reflexion zu Transmission, kontinuierlich variierend gewählt werden, so dass die Verspiegelung dort am stärksten ist, wo die Helligkeit des abgestrahlten Lichts am geringsten ist. Alternativ kann auch ein Helligkeitsgrenzwert relativ zur größten Helligkeit vorgegeben werden, und nur solche Bereiche, in denen die Helligkeit - ohne Verspiegelung - unter den vorgegebenen Grenzwert abgefallen ist, wird eine Teilverspiegelung - d.h. eine in einer Richtung transparente Schicht - auf das optische Element aufgebracht. Diese Variante ist kostengünstiger.

Überdies ist eine Teilverspiegelung auf Rückseite des transmissiven Bildgebers zur weiteren Homogenisierung der Lichtausbeute aus dem optischen Element sehr vorteilhaft. Auch diese kann zum Ausgleich von Helligkeitsunterschieden analog zur Teilverspiegelung auf dem optischen Element variierend ausgestaltet oder nur bereichsweise aufgebracht sein.

Weitere Verbesserungen in der Lichtausbeute lassen sich erzielen, wenn das optische Element zur verbesserten Auskopplung mittels einer Vielzahl von Vertiefungen laserstrukturiert ist, wobei die Vertiefungen nicht größer als 250 µm sind, um a) nicht sichtbar zu sein und b) nicht das von der Hintergrundbeleuchtung herrührende, im Winkel eingeschränkte Licht zu zerstreuen. Dabei können die Vertiefungen mit einer variierenden Flächenbelegung bzw. mit einer gradientenartigen Verteilung auf dem optischen Element angeordnet sein.

Alternativ oder ergänzend ist es möglich, dass das optische Element ein plattenförmiger Lichtleiter mit integrierten Prismen ist, wobei auf einer Oberfläche Licht auskoppelnde Mikroprismen vertieft im Lichtleiter integriert sind und die Mikroprismen jeweils als Kegel ausgebildet sind.

Von Vorteil ist ebenso ein bereits vom Design her kollimiertes Backlight als Hintergrundbeleuchtung, d.h. die Lichtquelle ist dort so konzipiert, dass ihr Licht nur in einen vorbeschriebenen, eingeschränkten Winkelbereich abgestrahlt wird. Weiterhin kann es günstig sein, wenn stets die gleiche Lichtquellen, z.B. die seitlich angeordneten Leuchtmittel, für beide Modi verwendet werden. Das Licht wird dann für die Umschaltung zwischen den beiden Betriebsarten B1 und B2 beispielsweise über einen optoelektronischen oder optomechanischen Schalter einmal in das optische Element und einmal in die Hintergrundbeleuchtung eingekoppelt. Als Schalter kommt hier z.B. ein Shutter oder eine mechanische Umschaltung wie ein kippbarer Spiegel in Frage. Auch können die Leuchtmittel zweizeilig ausgebildet sein, wobei dann jeweils nur die gewünschte bzw. entsprechende Zeile angeschaltet wird. Letztere Variante ist besonders vorteilhaft, wenn die Beleuchtungseinrichtung auch den dritten, oben beschriebenen Betriebsmodus B3 aufweist.

Weiterhin können die gewünschten bzw. die erlaubten Abstrahlungsrichtungen für den Modus B2 für eine eingeschränkte Sicht jeweils für die horizontale und vertikale Richtung unabhängig voneinander definiert und umgesetzt werden. Beispielsweise könnte in der vertikalen Richtung ein größerer Winkel sinnvoll sein, als in der horizontalen Richtung, etwa wenn bei Geldautomaten Personen mit unterschiedlicher Größe etwas sehen sollen, während der Seiteneinblick stark eingeschränkt bleiben soll.

In einer weiteren vorteilhaften Ausgestaltung umfasst die Beleuchtungseinrichtung eine Steuerung, welche in der Betriebsart B1 für freie Sicht Helligkeitsunterschiede über die Fläche des aus dem optischen Element ausgekoppelten Lichtes vermittels einer zu diesen Helligkeitsunterschieden komplementären Steuerung der auf dem transmissiven Bildgeber dargestellten Bildinhalte ausgleicht, so dass ein im Wesentlichen bezüglich der Helligkeit homogenes Bild auf dem transmissiven Bildgeber wahrnehmbar ist. Mit anderen Worten: Sollten bei der Auskopplung aus dem optischen Element Helligkeitsunterschiede, z.B. Gradienten in einer - beispielsweise in horizontaler Richtung - oder in mehreren Richtungen - beispielsweise in horizontaler und vertikaler Richtung, bezogen auf den Betrachter, oder in schräg verlaufenden Richtungen - oder aber auch Helligkeitsflecken entstehen, wird das dargestellte Bild entsprechend gedimmt. Nach Ausmessen der Helligkeitsunterschiede können dazu beispielsweise mit einem festen Faktor normierte Reziprokwerte der relativen Helligkeit, d.h. der normierten Helligkeit auf Werte, bei denen die höchste relative Helligkeit gleich 1 ist, ermittelt werden, mit denen die Helligkeitswerte jeweils an den entsprechenden Stellen im Bild multipliziert werden. Auf diese Weise werden dann die dunkelsten Stellen nicht und die hellsten Stellen am stärksten gedimmt.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Die Erfindung wird im Folgenden an Hand von Zeichnungen, die auch erfindungswesentliche Merkmale zeigen, näher erläutert. Es zeigt
- Fig.1: eine Prinzipskizze zur Auskopplung von Licht, das seitlich in ein optisches Element eingekoppelt wird, in einen größtmöglichen Raumwinkel,
- Fig.2: eine Prinzipskizze zum Durchgang von Licht, das aus einer Hintergrundbeleuchtung herrührt, durch das optische Element,
- Fig.3: eine Prinzipskizze einer Beleuchtungseinrichtung in einer ersten Betriebsart B1 für einen freien Sichtmodus, bei der ein größtmöglicher Raumwinkel ausgeleuchtet wird, wobei die Beleuchtungseinrichtung zusammen mit einem Bildgeber verwendet wird,
- Fig.4: eine Prinzipskizze der Beleuchtungseinrichtung in einer zweiten Betriebsart B2 für einen eingeschränkten Sichtmodus, bei der ein eingeschränkter Raumwinkel ausgeleuchtet wird, wobei die Beleuchtungseinrichtung zusammen mit einem Bildgeber verwendet wird,

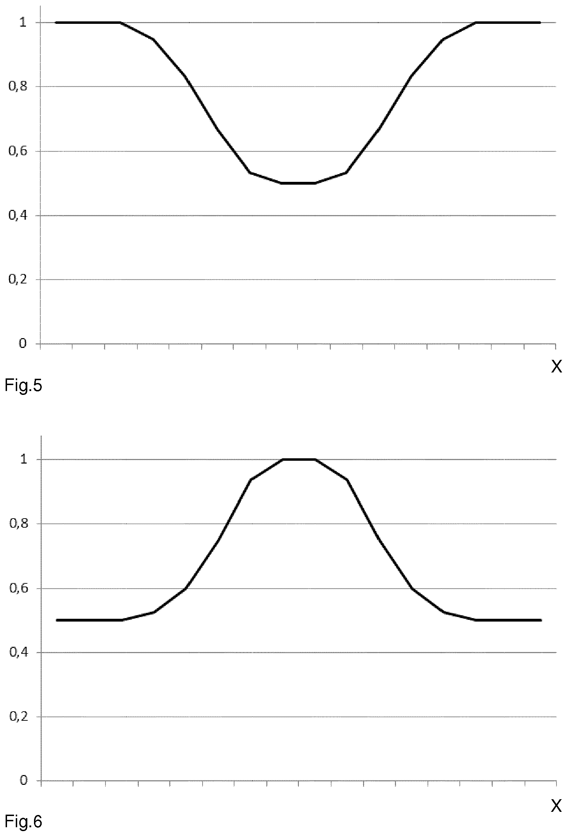

- Fig.5: ein Diagramm zur relativen Helligkeit des aus dem optischen Element ausgekoppelten Lichtes, sowie
- Fig.6: ein Diagramm für Korrekturwerte für die Helligkeit eines darzustellenden Bildes, basierend auf den Gegebenheiten nach Fig.5.

Die Zeichnungen sind nicht maßstabsgetreu und geben lediglich Prinzipdarstellungen wieder.

In Fig.1 ist eine Prinzipskizze zur Auskopplung von Licht, das seitlich von Leuchtmitteln 4 in ein optisches Element 3 - hier nur als kleiner Ausschnitt in Schnittdarstellung gezeigt - eingekoppelt wird, in einen größtmöglichen Raumwinkel, dargestellt. Die kleinen Punkte stilisieren Streupartikel als Streuzentren für das Licht, welches seitlich von den Leuchtmitteln 4 eingekoppelt wird. Auf Grund von Totalreflexion werden Strahlen dieses eingekoppelten Lichts an der Außenwand wieder zurück in den Lichtleiter geworfen, bis sie schließlich auf einen Streupartikel zur gewünschten Auskopplung treffen. Die Darstellung in Fig.1 ist zur besseren Erkennbarkeit stark stilisiert; in der Realität sind eine sehr große Vielzahl an Strahlengängen im optischen Element 3 umgesetzt.

Fig.2 zeigt eine Prinzipskizze zum Durchgang von Licht, das aus einer Hintergrundbeleuchtung 2 herrührt, durch das optische Element 3. Die Streupartikel spielen dabei eine vernachlässigbare Rolle, da das Licht gerichtet aus der Hintergrundbeleuchtung 2 herrührt und nicht bzw. kaum durch Totalreflexion im Lichtleiter hin und her gelenkt wird.

Fig.3 gibt eine Prinzipskizze einer Beleuchtungseinrichtung 1 in einer ersten Betriebsart B1, einem freien Sichtmodus wieder, bei der ein größtmöglicher Raumwinkel ausgeleuchtet wird, wobei die Beleuchtungseinrichtung 1 hier zusammen mit einem Bildgeber 5 verwendet wird. Fig. 4 zeigt die Beleuchtungseinrichtung 1 in einer zweiten Betriebsart B2 für einen eingeschränkten Sichtmodus, in dem nur ein eingeschränkter Raumwinkel ausgeleuchtet wird.

Die Beleuchtungseinrichtung 1, die in mindestens zwei Betriebsarten B1, B2, .., betrieben werden kann, umfasst
- eine flächenartig ausgedehnte Hintergrundbeleuchtung 2, die in der Betriebsart B2 für einen eingeschränkten Sichtmodus Licht in einen eingeschränkten Winkelbereich abstrahlt, wobei das von der Hintergrundbeleuchtung 2 ausgehende Licht in mindestens einer Richtung, die in einem Winkel größer als 45 Grad zur Flächennormale der Hintergrundbeleuchtung 2 gelegen ist, mit höchstens 10% der maximalen Lichtstärke abgestrahlt wird,
- ein in Betrachtungsrichtung vor der Hintergrundbeleuchtung 2 gelegenes, plattenförmiges optisches Element 3, und
- Leuchtmittel 4, die seitlich an Schmalseiten des optischen Elements 3 angeordnet sind,
- wobei
   - das optische Element 3 als Lichtleiter ausgebildet ist, welcher aus einem Matrixkunststoff A und darin homogen verteilten Streupartikeln aus einem Polymerisat B, besteht,
   - der Anteil der Streupartikel bestehend aus Polymerisat B 0,01 bis 3 Gewichtsprozent bezogen auf den Matrixkunststoff A beträgt,
   - die Brechzahl nD(B) des Polymerisats B um mindestens 0,01 Einheiten über der Brechzahl nD(A) des Matrixkunststoffs A liegt,
   - und der Lichtleiter für das von der Hintergrundbeleuchtung 2 ausgehende Licht zu mindestens 80% transparent ist,
   - so dass das aus den Leuchtmitteln 4 seitlich in das optische Element 3 einfallende Licht für einen freien Sichtbereich in der Betriebsart B1 in Richtungen, die in Winkeln größer als 45 Grad zur Flächennormale der Hintergrundbeleuchtung 2 gelegen sind, mit mindestens 20% der maximalen Lichtstärke abgestrahlt wird,
- wobei in der zweiten Betriebsart B2 die Hintergrundbeleuchtung 2 ein- und die Leuchtmittel 4 ausgeschaltet sind, und wobei in der ersten Betriebsart B1 die Leuchtmittel 4 ein- und die Hintergrundbeleuchtung 2 ausgeschaltet sind.

Durch diese Konfiguration des optischen Elements 3 aus Matrixkunststoff mit homogen darin verteilten Polymerisat-Streupartikeln findet im optischen Element 3 und auch in der gesamten Beleuchtungseinrichtung 1 keine oder zumindest nur eine vernachlässigbare Umwandlung von Licht, welches von der Hintergrundbeleuchtung 2 herrührt und ursprünglich in einen eingeschränkten Winkelbereich abgestrahlt wird, in Licht, welches in einen uneingeschränkten Winkelbereich abgestrahlt wird, statt.

Es ist hierzu anzumerken, dass während das aus den Leuchtmitteln seitlich in das optische Element 3 einfallende Licht für einen freien Sichtbereich in der Betriebsart B1 in Richtungen, die in Winkeln größer als 45 Grad zur Flächennormale der Hintergrundbeleuchtung 2 gelegen sind, mit mindestens 20% der maximalen Lichtstärke abgestrahlt wird, selbstredend in Winkel, welche kleiner als 45 Grad zur Flächennormale der Hintergrundbeleuchtung 2 gelegen sind, ebenso ein Großteil des Lichtes abgestrahlt bzw. ausgekoppelt wird, so dass insgesamt ein sehr großer Winkelbereich, im besten Falle etwa der Halbraum vor dem optischen Element 3, ausgeleuchtet wird.

Die erste Betriebsart B1 für einen freien Sichtbereich erlaubt dann, auf dem Bildgeber 5, beispielsweise einem LCD-Panel, das Bild aus einem möglichst großen Raumwinkel in voller Auflösung wahrzunehmen. Umgekehrt verhält es sich in der zweiten Betriebsart B2 für einen eingeschränkten Sichtbereich so, dass das Bild auf dem Bildgeber 5 ebenso in voller Auflösung, jedoch nur aus einem eingeschränkten Raumwinkel wahrnehmbar ist, was einem privaten Betrachtungsmodus entspricht (sogenannter Sichtschutz- oder Privacy-Modus). Je nach Ausgestaltung der Parameter für die Beleuchtungswinkel ist dann auch der sichtbare Bereich des vom Bildgeber 5 dargestellten Bildes entsprechend im Raumwinkel eingeschränkt wahrnehmbar. In einer dritten, nicht dargestellten Betriebsart B3 können sowohl Hintergrundbeleuchtung 2 als auch die Leuchtmittel 4 eingeschaltet sein, um ein möglichst helles Bild darzustellen.

Die Beleuchtungseinrichtung 1 kann in vielerlei Hinsicht variiert werden, um die gewünschten Effekte zu erzielen.

Die Hintergrundbeleuchtung 2 kann vorteilhaft ausgebildet sein als Side-light, Edgelight, Direct-LED-Backlight, Edge-LED-Backlight, OLED oder als ein anderer Flächenstrahler. Auch ist es außerdem möglich, dass die Hintergrundbeleuchtung 2 eine Dunkelfeldbeleuchtung ist. Besonders bevorzugt aber ist die Hintergrundbeleuchtung 2 hier eine typisches Backlight-Beleuchtung, d.h. z.B. basierend auf Edgelight, Direct LED Backlight o.ä., auf welche ein permanenter Privacy-Filter (z.B. Vikuiti™ von 3M™) aufgebracht ist, um die Abstrahlcharakteristik des Lichtes derart zu beschneiden, dass das Licht im Wesentlichen nur in einen eingeschränkten Raumwinkel abgestrahlt wird.

Bei bestimmten Anwendungen ist ein gewisses Restlicht bei Schrägsicht aus großen Winkeln, z.B. über 45 Grad zur Mittelsenkrechten des Bildgebers 5 erlaubt. Bei den Leuchtmitteln 4 kann es sich beispielsweise um LEDs oder Laserdioden handeln. Andere Ausgestaltungen sind möglich.

Vorteilhaft werden in der ersten Betriebsart B1 für freie Sicht Helligkeitsunterschiede über die Fläche des aus dem optischen Element 3 ausgekoppelten Lichtes vermittels einer zu diesen Helligkeitsunterschieden komplementären Steuerung der auf dem transmissiven Bildgeber 5 dargestellten Bildinhalte ausgeglichen, so dass ein im Wesentlichen bezüglich der Helligkeit homogenes Bild auf dem transmissiven Bildgeber 5 wahrnehmbar ist. Mit anderen Worten: Sollten bei der Auskopplung aus dem optischen Element 3 Helligkeitsunterschiede, z.B. Gradienten in einer oder mehreren Richtungen, oder aber auch Helligkeitsflecken entstehen, wird das dargestellte Bild entsprechend gedimmt. Nach Ausmessen der Helligkeitsunterschiede können dazu beispielsweise mit einem festen Faktor normierte Reziprokwerte der relativen Helligkeit, d.h. der normierten Helligkeit auf Werte, bei denen die höchste relative Helligkeit gleich 1 ist, ermittelt werden, mit denen die Helligkeitswerte jeweils an den entsprechenden Stellen im Bild multipliziert werden. Auf diese Weise werden dann die dunkelsten Stellen nicht und die hellsten Stellen am meisten gedimmt.

Diesbezüglich zeigt Fig.5 ein Diagramm zur relativen Helligkeit des aus dem optischen Element 3 ausgekoppelten Lichtes sowie Fig.6 ein Diagramm für Korrekturwerte für die Helligkeit eines darzustellenden Bildes, basierend auf den Gegebenheiten nach Fig.5.

Die relative Helligkeit - in der Regel die Leuchtdichte - gemäß Fig.5 wird einfach durch Teilen der lokal gemessen Werte durch den höchsten Wert - einschließlich der Einheit, in der Regel "cd/m²" oder "nit" - erreicht. Die Abszisse ist mit "X" bezeichnet, was hier der horizontalen Richtung des optischen Elements 3 entsprechen soll. Dann sind beispielsweise jeweils LED-Zeilen zur Lichteinkopplung an den beiden vertikalen Schmalseiten des optischen Elements 3 angeordnet, um eine Helligkeitsverteilung gemäß Fig.5 zu erhalten.

Die Werte gemäß Fig.6 für die gleichen (relativen) Orte X in horizontaler Richtung, jetzt aber auf dem transmissiven Bildgeber 5, erhält man nun durch Bilden des Kehrwerts der relativen Helligkeit gemäß Fig.5 und nachfolgender Multiplikation mit einem festen Faktor, hier ist der Faktor beispielhaft 0.5. Dieser Faktor dient der Normierung der Kehrwerte, da die Helligkeitswerte für das auf dem Bildgeber 5 dargestellte Bild nicht mit einem Faktor größer 1 multipliziert werden dürfen, denn der Bildgeber 5 selber kann die Helligkeit nicht erhöhen. Der besagte Faktor ist in der Regel der kleinste relative Helligkeitswert, kann aber unter Umständen auch anders gewählt werden, etwa, um das Gesamtbild weiter zu dimmen.

Werden nun die Helligkeitswerte des auf dem Bildgeber 5 darzustellenden Bildes lokal jeweils an den Stellen X entsprechend mit den wie vorstehend beschrieben ermittelten normierten Reziprokwerten der relativen Helligkeit multipliziert, erscheint das Gesamtbild im Modus B1 im Wesentlichen homogen bezüglich der Helligkeit, weil die Helligkeitsunterschiede in der Beleuchtung durch das optische Element 3 im Bildinhalt ausgeglichen worden sind.

Die vorangehend beschriebene Beleuchtungseinrichtung kann vorteilhaft überall da angewendet werden, wo vertrauliche Daten angezeigt und/oder eingegeben werden, wie etwa bei der PIN-Eingabe oder zur Datenanzeige an Geldautomaten oder Zahlungsterminals oder zur Passworteingabe oder beim Lesen von Emails auf mobilen Geräten.

Die Beleuchtungseinrichtung ist schaltbar und ermöglicht mindestens zwei Beleuchtungsmodi, wobei der eine Modus nur einen eingeschränkten Raumwinkel beleuchtet und der andere Modus die Beleuchtung in einen möglichst großen Raumwinkel gestattet.

Somit kann bei Verwendung der Beleuchtungseinrichtung mit einem Bildschirm eine sichere Darstellung von Informationen durch einen wahlweise eingeschränkten Betrachtungswinkel realisiert werden, wobei in einem zweiten Modus eine freie, möglichst im Betrachtungswinkel uneingeschränkte Sicht möglich ist. Die Beleuchtungseinrichtung ist mit einfachen Mitteln preisgünstig umsetzbar. In beiden beschriebenen Betriebsmodi B1 und B2 ist die volle native Auflösung des verwendeten Bildschirms sichtbar. Ferner wird ein Lichtverlust möglichst gering gehalten.

Im Gegensatz zum Stand der Technik muss weder eine starke UV-Lichtquelle benutzt werden, noch müssen erst aufwändig winkeleingeschränkte Lichtverteilungen in uneingeschränkte Lichtverteilungen umgewandelt werden - was die Helligkeit massiv vermindert -, noch sind aufwändige Prismen- bzw. Mikrolinsenstrukturen notwendig.

## Patentansprüche

1. Beleuchtungseinrichtung (1), die in mindestens zwei Betriebsarten B1 für einen freien Sichtmodus und B2 für einen eingeschränkten Sichtmodus betrieben werden kann, umfassend
- eine flächenartig ausgedehnte Hintergrundbeleuchtung (2), die in der Betriebsart B2 für einen eingeschränkten Sichtmodus Licht in einen eingeschränkten Winkelbereich abstrahlt, wobei das von der Hintergrundbeleuchtung (2) ausgehende Licht in mindestens einer Richtung, die in einem Winkel größer als 45 Grad zur Flächennormale der Hintergrundbeleuchtung (2) gelegen ist, mit höchstens 10% der maximalen Lichtstärke abgestrahlt wird,
- ein in Betrachtungsrichtung vor der Hintergrundbeleuchtung (2) gelegenes, plattenförmiges optisches Element (3), und
- Leuchtmittel (4), die seitlich an Schmalseiten des optischen Elements (3) angeordnet sind,
- wobei
- das optische Element (3) als Lichtleiter ausgebildet ist, welcher aus einem Matrixkunststoff A und darin homogen verteilten Streupartikeln aus einem Polymerisat B besteht,
- der Anteil der Streupartikel bestehend aus Polymerisat B 0,01 bis 3 Gewichtsprozent bezogen auf den Matrixkunststoff A beträgt,
- die Brechzahl nD(B) des Polymerisats B um mindestens 0,01 Einheiten über der Brechzahl nD(A) des Matrixkunststoffs A liegt,
- und der Lichtleiter für das von der Hintergrundbeleuchtung (2) ausgehende Licht zu mindestens 80% transparent ist,
- so dass das aus den Leuchtmitteln (4) seitlich in das optische Element (3) einfallende Licht für einen freien Sichtbereich in der Betriebsart B1 in Richtungen, die in Winkeln größer als 45 Grad zur Flächennormale der Hintergrundbeleuchtung (2) gelegen sind, mit mindestens 20% der maximalen Lichtstärke abgestrahlt wird,
- wobei in der Betriebsart B2 die Hintergrundbeleuchtung (2) ein- und die Leuchtmittel (4) ausgeschaltet sind, und wobei in der Betriebsart B1 die Leuchtmittel (4) ein- und die Hintergrundbeleuchtung (2) ausgeschaltet sind.

2. Beleuchtungseinrichtung (1) nach Anspruch 1, **dadurch gekennzeichnet, dass** die Leuchtmittel (4) LEDs oder Laserdioden sind.

3. Beleuchtungseinrichtung (1) nach Anspruch 1 oder 2, **dadurch gekennzeichnet, dass** die Hintergrundbeleuchtung (2) mindestens eine optische Schicht zur Kollimation von Licht enthält.

4. Beleuchtungseinrichtung (1) nach einem der Ansprüche 1 bis 3, **dadurch gekennzeichnet, dass** die Hintergrundbeleuchtung (2) ausgebildet ist als Side-light, Edgelight, Direct LED Backlight, edge LED Backlight, OLED oder als ein anderer Flächenstrahler.

5. Beleuchtungseinrichtung (1) nach einem der Ansprüche 1 bis 4, **dadurch gekennzeichnet, dass** die Hintergrundbeleuchtung (2) ein Backlight, beispielsweise ein Edgelight oder Direct LED Backlight, ist, auf welches ein permanenter Privacy-filter aufgebracht ist.

6. Beleuchtungseinrichtung (1) nach Anspruch 1, die zusätzlich in einer dritten Betriebsart B3 für einen besonders hellen Sichtmodus betreibbar ist, wobei in der Betriebsart B3 sowohl die Hintergrundbeleuchtung (2) als auch die Leuchtmittel (4) eingeschaltet sind.

7. Beleuchtungseinrichtung (1), die in mindestens zwei Betriebsarten B3 für einen freien Sichtmodus und B2 für einen eingeschränkten Sichtmodus betrieben werden kann, umfassend
- eine flächenartig ausgedehnte Hintergrundbeleuchtung (2), die in der Betriebsart B2 für einen eingeschränkten Sichtmodus Licht in einen eingeschränkten Winkelbereich abstrahlt, wobei das von der Hintergrundbeleuchtung (2) ausgehende Licht in mindestens einer Richtung, die in einem Winkel größer als 45 Grad zur Flächennormale der Hintergrundbeleuchtung (2) gelegen ist, mit höchstens 10% der maximalen Lichtstärke abgestrahlt wird,
- ein in Betrachtungsrichtung vor der Hintergrundbeleuchtung (2) gelegenes, plattenförmiges optisches Element (3), und
- Leuchtmittel (4), die seitlich an Schmalseiten des optischen Elements (3) angeordnet sind,
- wobei
- das optische Element (3) als Lichtleiter ausgebildet ist, welcher aus einem Matrixkunststoff A und darin homogen verteilten Streupartikeln aus einem Polymerisat B besteht,
- der Anteil der Streupartikel bestehend aus Polymerisat B 0,01 bis 3 Gewichtsprozent bezogen auf den Matrixkunststoff A beträgt,
- die Brechzahl nD(B) des Polymerisats B um mindestens 0,01 Einheiten über der Brechzahl nD(A) des Matrixkunststoffs A liegt,
- und der Lichtleiter für das von der Hintergrundbeleuchtung (2) ausgehende Licht zu mindestens 80% transparent ist,
- so dass das aus den Leuchtmitteln (4) seitlich in das optische Element (3) einfallende Licht für einen freien Sichtbereich in der Betriebsart B3 in Richtungen, die in Winkeln größer als 45 Grad zur Flächennormale der Hintergrundbeleuchtung (2) gelegen sind, mit mindestens 20% der maximalen Lichtstärke abgestrahlt wird,
wobei in der Betriebsart B2 die Hintergrundbeleuchtung (2) ein- und die Leuchtmittel (4) ausgeschaltet sind, und wobei in der Betriebsart B3 sowohl die Leuchtmittel (4) als auch die Hintergrundbeleuchtung (2) eingeschaltet sind.

8. Beleuchtungseinrichtung (1) nach einem der Ansprüche 1 bis 7, umfassend außerdem eine elektronische Ansteuerung, welche den Übergang zwischen den Betriebsmodi B1 bzw. B3 und B2 oder umgekehrt derart graduell steuert, dass über einen zeitlichen Verlauf hinweg, jeweils die Helligkeit der Hintergrundbeleuchtung (2) auf Null gefahren wird während gleichzeitig die Helligkeit der Leuchtmittel 4 auf ein Maximum oder einen bestimmten Wert hochgefahren wird, und umgekehrt.

9. Beleuchtungseinrichtung (1) nach einem der Ansprüche 1 bis 8, **dadurch gekennzeichnet, dass** das optische Element (3) auf seiner der Hintergrundbeleuchtung (2) zugewandten Seite teilverspiegelt ist, wobei die Stärke der Verspiegelung zum Ausgleich von Helligkeitsunterschieden in der Betriebsart B1 bzw. B3 über die Fläche des aus dem optischen Element (3) ausgekoppelten Lichts variierend ausgestaltet ist, oder wobei nur solche Bereiche teilverspiegelt sind, bei denen die Helligkeit ohne Verspiegelung unter einem vorgegebenen Grenzwert abgefallen ist.

10. Beleuchtungseinrichtung (1) nach einem der Ansprüche 1 bis 9, **dadurch gekennzeichnet, dass** vor der Beleuchtungseinrichtung (1) ein transmissiver Bildgeber (5), beispielsweise ein LCD-Panel, angeordnet ist.

11. Beleuchtungseinrichtung (1) nach Anspruch 10, umfassend eine Steuerung, welche in der Betriebsart B1 bzw. B3 Helligkeitsunterschiede über die Fläche des aus dem optischen Element (3) ausgekoppelten Lichtes vermittels einer zu diesen Helligkeitsunterschieden komplementären Steuerung der auf dem transmissiven Bildgeber (5) dargestellten Bildinhalte ausgleicht, so dass ein im Wesentlichen bezüglich der Helligkeit homogenes Bild auf dem transmissiven Bildgeber (5) wahrnehmbar ist.

12. Verwendung einer Beleuchtungseinrichtung (1) nach einem der Ansprüche 10 oder 11 zur Eingabe oder Anzeige von vertraulichen Daten, beispielweise von PIN-Geheimnummern, E-mails, SMS oder Passwörtern, an Geldautomaten, Zahlungsterminals oder mobilen Geräten.

## Claims

1. A lighting device (1) that can be used in at least two operating modes, viz. B1 for a free viewing mode and B2 for a restricted viewing mode, comprising
- a backlighting system (2) of planar extension that in operating mode B2 for a restricted viewing mode radiates light in a restricted angular range, wherein the light emitted by the backlighting system (2) is, in at least one direction situated at an angle greater than 45 degrees relative to the surface normal of the backlighting system (2), radiated with no more than 10% of the maximum luminous intensity,
- a plate-shaped optical element (3) situated in front of the backlighting system (2) as seen in the viewing direction, and
- illuminants (4) arranged laterally at the narrow sides of the optical element (3),
- wherein
- the optical element (3) is configured as a light guide, which consists of a matrix plastic A and, homogeneously distributed therein, scattering particles of a polymer B,
- the share of the scattering particles consisting of polymer B is 0.01 to 3 weight-percent relative to the matrix plastic A,
- the refractive index nD(B) of the polymer B is at least 0.01 units above the refractive index nD(A) of the matrix plastic A,
- and the light guide is transparent to at least 80% of the light emitted by the backlighting system (2),
- so that, for a free viewing range in operating mode B1, the light laterally incident on the optical element (3) from the illuminants (4) is, in directions situated at angles greater than 45 degrees relative to the surface normal of the backlighting system (2), radiated with at least 20% of the maximum luminous intensity,
- wherein, in operating mode B2, the backlighting system (2) is switched on and the illuminants (4) are switched off, and wherein, in operating mode B1, the illuminants (4) are switched on and the backlighting system (2) is switched off.

2. The lighting device (1) as claimed in Claim 1, **characterized in that** the illuminants (4) are LEDs or laser diodes.

3. The lighting device (1) as claimed in Claim 1 or 2, **characterized in that** the backlighting system (2) comprises at least one optical layer for the collimating of light.

4. The lighting device (1) as claimed in any one of Claims 1 through 3, **characterized in that** the backlighting system (2) is configured as a side light, edge light, direct LED backlight, edge LED backlight, OLED or some other surface emitter.

5. The lighting device (1) as claimed in any one of Claims 1 through 4, **characterized in that** the backlighting system (2) is a backlight, e.g. an edge light or direct LED backlight, on which a privacy filter is applied.

6. The lighting device (1) as claimed in Claim 1 that additionally can be operated in a third operating mode B3 for a particularly bright viewing mode, with both the backlighting system (2) and the illuminants (4) being switched on in operating mode B3.

7. A lighting device (1) that can be used in at least two operating modes, viz. B3 for a free viewing mode and B2 for a restricted viewing mode, comprising
- a backlighting system (2) of planar extension that in operating mode B2 for a restricted viewing mode radiates light in a restricted angular range, wherein the light emitted by the backlighting system (2) is, in at least one direction situated at an angle greater than 45 degrees relative to the surface normal of the backlighting system (2), radiated with no more than 10% of the maximum luminous intensity,
- a plate-shaped optical element (3) situated in front of the backlighting system (2) as seen in the viewing direction, and
- illuminants (4) arranged laterally at the narrow sides of the optical element (3),
- wherein
- the optical element (3) is configured as a light guide, which consists of a matrix plastic A and, homogeneously distributed therein, scattering particles of a polymer B,
- the share of the scattering particles consisting of polymer B is 0.01 to 3 weight-percent relative to the matrix plastic A,
- the refractive index nD(B) of the polymer B is at least 0.01 units above the refractive index nD(A) of the matrix plastic A,
- and the light guide is transparent to at least 80% of the light emitted by the backlighting system (2),
- so that, for a free viewing range in operating mode B3, the light laterally incident on the optical element (3) from the illuminants (4) is, in directions situated at angles greater than 45 degrees relative to the surface normal of the backlighting system (2), radiated with at least 20% of the maximum luminous intensity,
wherein, in operating mode B2, the backlighting system (2) is switched on and the illuminants (4) are switched off, and wherein, in operating mode B3, both the illuminants (4) and the backlighting system (2) are switched on.

8. The lighting device (1) as claimed in any one of Claims 1 through 7, comprising in addition an electronic control system, which gradually controls the transition between operating modes B1 or B3 and B2 or vice versa in such a way that, over a course of time, the brightness of the backlighting system (2) is decreased to zero, while the brightness of the illuminants (4) is simultaneously increased to a maximum or to a specified level, and vice versa.

9. The lighting device (1) as claimed in any one of Claims 1 through 8, **characterized in that** the optical element (3) has a partially reflecting coat on its side facing the backlighting system (2), with the degree of reflection of the light coupled out of the optical element (3) varying across the area to compensate brightness differences in operating mode B1 or B3, or with the partially reflecting coat being applied in such areas only in which brightness without a reflecting coat has dropped to below a specified limit.

10. The lighting device (1) as claimed in any one of Claims 1 through 9, **characterized in that** a transmissive imager (5), e.g. an LCD panel, is arranged in front of the lighting device (1).

11. The lighting device (1) as claimed in Claim 10, comprising a control system that, in operating mode B1 or B3, compensates across-the-area brightness differences of the light coupled out of the optical element (3) by means of controlling the image contents presented on the transmissive imager (5) in a manner complementary to these brightness differences, so that the image perceived on the transmissive imager (5) is essentially homogeneous as regards brightness.

12. Use of a lighting device (1) as claimed in any one of Claims 10 or 11 for the input or display of confidential data, e.g. PINs, E-mails, SMS text messages or passwords, on automated teller machines, cash terminals or mobile devices.

## Revendications

1. Dispositif d'éclairage (1), qui peut fonctionner selon au moins deux modes d'exploitation B1 pour un mode de visualisation dégagée et B2 pour un mode de visualisation limitée, comprenant
- un rétroéclairage étendu plan (2), qui en mode d'exploitation B2 émet une lumière dans une plage angulaire restreinte pour un mode de visualisation limitée, où la lumière provenant du rétroéclairage (2) est émise à au plus 10% de l'intensité lumineuse maximale dans au moins une direction située dans un angle de plus de 45 degrés par rapport à la normale du rétroéclairage (2),
- un élément optique en forme de plaque (3) positionné dans le sens d'observation devant le rétroéclairage (2), et
- des sources lumineuses (4), placées latéralement sur les côtés étroits de l'élément optique (3),
- où
- l'élément optique (3) est constitué en conducteur optique, qui se compose d'un matériau synthétique matriciel A et de particules diffusantes en un polymère B qui y sont réparties de façon homogène,
- la proportion de particules diffusantes en polymère B représente de 0,01 à 3 % en poids du matériau synthétique matriciel A,
- l'indice de réfraction nD(B) du polymère B est supérieur d'au moins 0,01 unités à l'indice de réfraction nD(A) du matériau synthétique matriciel A,
- et le conducteur optique est au moins à 80% transparent pour la lumière provenant du rétroéclairage (2),
- de telle sorte que la lumière projetée latéralement par les sources lumineuses (4) sur le côté de l'élément optique (3) est émise à au moins 20% de l'intensité lumineuse maximale pour assurer une zone de visualisation dégagée en mode d'exploitation B1 dans des directions situées dans un angle de plus de 45 degrés par rapport à la normale du rétroéclairage (2),
- où en mode d'exploitation B2 le rétroéclairage (2) est activé et les sources lumineuses (4) sont désactivées, et où en mode d'exploitation B1 les sources lumineuses (4) sont activées et le rétroéclairage (2) est désactivé.

2. Dispositif d'éclairage (1) selon la revendication 1, **caractérisé en ce que** les sources lumineuses (4) sont des LED ou des diodes lasers.

3. Dispositif d'éclairage (1) selon la revendication 1 ou 2, **caractérisé en ce que** le rétroéclairage (2) contient au moins une couche optique pour la collimation de la lumière.

4. Dispositif d'éclairage (1) selon l'une des revendications 1 à 3, **caractérisé en ce que** le rétroéclairage (2) est constitué comme éclairage latéral, éclairage de bord, rétroéclairage direct à LED, rétroéclairage de bord à LED, OLED ou comme un autre élément rayonnant.

5. Dispositif d'éclairage (1) selon l'une des revendications 1 à 4, **caractérisé en ce que** le rétroéclairage (2) est un rétroéclairage, par exemple un éclairage de bord ou un rétroéclairage direct à LED, sur lequel est placé de façon permanente un filtre de confidentialité.

6. Dispositif d'éclairage (1) selon la revendication 1, qui peut fonctionner en outre selon un troisième mode d'exploitation B3 pour un mode de visualisation particulièrement lumineuse, où en mode d'exploitation B3 le rétroéclairage (2) ainsi que les sources lumineuses (4) sont activés.

7. Dispositif d'éclairage (1), qui peut fonctionner selon au moins deux modes d'exploitation B3 pour un mode de visualisation dégagée et B2 pour un mode de visualisation limitée, comprenant
- un rétroéclairage étendu plan (2), qui en mode d'exploitation B2 émet une lumière dans une plage angulaire restreinte pour un mode de visualisation limitée, où la lumière provenant du rétroéclairage (2) est émise à au plus 10% de l'intensité lumineuse maximale dans au moins une direction située dans un angle de plus de 45 degrés par rapport à la normale du rétroéclairage (2),
- un élément optique en forme de plaque (3) positionné dans le sens d'observation devant le rétroéclairage (2), et
- des sources lumineuses (4), placées latéralement sur les côtés étroits de l'élément optique (3),
- où
- l'élément optique (3) est constitué en conducteur optique, qui se compose d'un matériau synthétique matriciel A et de particules diffusantes en un polymère B qui y sont réparties de façon homogène,
- la proportion de particules diffusantes en polymère B représente de 0,01 à 3 % en poids du matériau synthétique matriciel A,
- l'indice de réfraction nD(B) du polymère B est supérieur d'au moins 0,01 unités à l'indice de réfraction nD(A) du matériau synthétique matriciel A,
- et le conducteur optique est au moins à 80% transparent pour la lumière provenant du rétroéclairage (2),
- de telle sorte que la lumière projetée latéralement par les sources lumineuses (4) sur le côté de l'élément optique (3) est émise à au moins 20% de l'intensité lumineuse maximale pour assurer une zone de visualisation dégagée en mode d'exploitation B3 dans des directions situées dans un angle de plus de 45 degrés par rapport à la normale du rétroéclairage (2),
où en mode d'exploitation B2 le rétroéclairage (2) est activé et les sources lumineuses (4) sont désactivées, et où en mode d'exploitation B3 les sources lumineuses (4) tout comme le rétroéclairage (2) sont activés.

8. Dispositif d'éclairage (1) selon l'une des revendications 1 à 7, comprenant par ailleurs une commande électronique qui contrôle la transition entre le mode d'exploitation B1 ou éventuellement le B3 et le B2 ou vice versa de façon si progressive que durant un certain lapse de temps la luminosité du rétroéclairage (2) est abaissée à zéro alors que simultanément la luminosité des sources lumineuses 4 est augmentée au maximum ou à un niveau prédéterminé, et vice versa.

9. Dispositif d'éclairage (1) selon l'une des revendications 1 à 8, **caractérisé en ce que** l'élément optique (3) est rendu partiellement réfléchissant sur sa face tournée vers le rétroéclairage (2), où l'intensité du traitement réfléchissant varie pour compenser les écarts superficiels de luminosité de la lumière émanant de l'élément optique (3) en mode d'exploitation B1 ou B3, ou où seules sont rendues partiellement réfléchissantes les zones dans lesquelles la luminosité sans éléments réfléchissants descend en-dessous d'une valeur seuil prédéterminée.

10. Dispositif d'éclairage (1) selon l'une des revendications 1 à 9, **caractérisé en ce qu'**un dispositif d'imagerie transmissive (5), par exemple un écran LCD, est placé devant le dispositif d'éclairage (1).

11. Dispositif d'éclairage (1) selon la revendication 10, comprenant un contrôle qui en mode d'exploitation B1 ou B3 compense les écarts superficiels de luminosité de la lumière émanant de l'élément optique (3) au moyen d'un contrôle complémentaire de ces écarts de luminosité des contenus visualisés sur le dispositif d'imagerie transmissive (5) de telle sorte que soit perceptible sur le dispositif d'imagerie transmissive (5) une image présentant une luminosité essentiellement homogène.

12. Utilisation d'un dispositif d'éclairage (1) selon l'une des revendications 10 ou 11 pour entrer ou afficher des données confidentielles, par exemple des numéros secrets PIN, des courriels, des textos ou mots de passe, sur des distributeurs automatiques de billets, des terminaux de paiement ou des appareils mobiles.
